# EUROPEAN PATENT APPLICATION

(11) **EP 2 309 415 A1**
(43) Date of publication of application: **13.04.2011**
(21) Application number: 10178498.1
(22) Date of filing: 22.09.2010
(51) Int. Cl.: G06K 7/10

(54) **Method and system for recognizing barcode**

(30) Priority: 25.09.2009 CN 200910175753; 21.02.2010 CN 201010129131
(71) Applicant: Getac Technology Corp., Taipei City 11568 (TW)
(72) Inventor: Chiou, Hann Huei, 11568 Taipei City (TW); Wu, Kuo Chuan, 11568, Taipei City (TW)
(74) Representative: Schmidt, Axel

(57) **Abstract**

A method for recognizing a barcode is provided for improving the recognition efficiency of a hand-held data processing device. According to the method, an image capturing module (21) of the hand-held data processing device (20) captures a target frame containing the barcode, so as to acquire the barcode. A wireless communication interface of the hand-held data processing device transmits the barcode and a recognition request to a recognition server (10) over a wireless network (30). The recognition server (10) includes a barcode recognition means (11) for recognizing plural barcode types, and the recognition server is connected to the wireless network for receiving the barcode and the recognition request. Through the barcode recognition means (11), the recognition server recognizes the barcode, and returns a recognition result to the hand-held data processing device (20) over the wireless network (30). Finally, the hand-held data processing device receives and screens the recognition result on a screen.

## Description

### Technical Field

The present invention relates to an image processing method and system, and more particularly to a method and system for recognizing a plurality of types of barcodes using a hand-held data processing device.

### Related Art

Barcodes have been widely applied in many industries and bring a lot of convenience. Commonly used barcode reading equipment is an optical barcode scanner, which is formed by a scanner with a built-in optical sensing element such as a charge coupled device CCD and a decoder circuit. The scanner is used to scan a barcode, convert the barcode into an analog signal, and transmit the analog signal to the decoder for barcode decoding. The decoder is accomplished through hardware, and thus is faster than recognition program for recognizing barcodes. However, it is not easy to expand the function of the barcode reading equipment, and the types of barcodes supported by the barcode reading equipment cannot be increased.

Currently, many image processing technologies related to barcode recognition have been proposed, so that barcode recognition is no longer limited to customized barcode scanners or barcode reading devices. With the development of technologies, hand-held data processing devices further integrate wireless communication technologies, image capturing modules, program execution functions and other functions. Among such hand-held data processing devices, mobile phones and personal digital assistant PDA phones equipped with image capturing modules are the most popular. Currently, recognition programs applied to the hand-held data processing devices have been developed, so that the recognition programs in the hand-held data processing devices can be directly used for barcode interpretation and recognition, as long as the image capturing module of the hand-held data processing devices capture an image or frame containing a barcode.

US Patent Publication US20070214155 discloses a system and method for reading data using a hand-held wireless communication device. A data servo system pre-stores a plurality of batches of data. A machine-readable code is printed on a surface of an object or displayed on a displaying device. The machine-readable code contains an icon field and a description field. The description field stores a brief description of the machine-readable code. The icon field stores an icon pattern, and the icon pattern is corresponding to one of the plurality of batches of data. A hand-held wireless communication device has an image capturing device, a recognition program, a displaying device, and an input device. When it intends to read data corresponding to the machine-readable code, the input device generate a read signal, the image capturing device captures the machine-readable code, the recognition program obtains the icon field and the description field carried in the machine-readable code by recognition, and a read instruction and the icon pattern of the pointer field are transmitted to the data servo system over a wireless network according to the read signal, such that the data servo system finds out and reads corresponding data according to the icon pattern.

### SUMMARY

Accordingly, the first objective of the present invention is to provide a method for recognizing a barcode, which can improve the poor barcode recognition efficiency of a hand-held data processing device.

In order to achieve the first objective, the method for recognizing a barcode of the present invention is provided for a hand-held data processing device and a recognition server, wherein the hand-held data processing device includes an image capturing module and a wireless communication interface for connecting the hand-held data processing device over a wireless network. The method for recognizing a barcode the present invention includes at least the following steps:
(1) capturing a target frame containing a barcode by the image capturing module of the hand-held data processing device;
(2) acquiring the barcode in the target frame by the hand-held data processing device;
(3) transmitting the barcode and a recognition request by the wireless communication interface of the hand-held data processing device to the recognition server over the wireless network, wherein the recognition server includes barcode recognition means for recognizing a plurality of types of barcodes;
(4) performing recognition on the barcode by the barcode recognition means of the recognition server, and returning a recognition result by the recognition server to the hand-held data processing device over the wireless network; and
(5) receiving the recognition result by the hand-held data processing device, and displaying the recognition result on a screen.

Accordingly, the second objective of the present invention also provides a hand-held data processing device for recognizing a barcode, in which the hand-held data processing device recognizing barcodes efficiently with relative low hardware resources consumptions.

In order to achieve the second objective, the hand-held data processing device of the present invention includes at least the following means:
(1) an image capturing module, for capturing the target frame containing the barcode;
(2) a control module, used for controlling the image capturing module to capture the target frame containing the barcode, acquiring the barcode in the target frame to generate a recognition request corresponding to the barcode, and receiving a returned recognition result of the barcode;
(3) a wireless communication interface, connected to the control module, for connecting to the wireless network to transmit the barcode and the recognition request to a recognition server over the wireless network, and receive the recognition result returned by the recognition server; and
(4) a screen, connected to the control module, for displaying the target frame containing the barcode and the recognition result.

According to the third objective of the present invention also provides the system for recognizing a barcode, in which barcodes are efficiently recognized.

In order to achieve the third objective, the system for recognizing barcode includes at least the following means:
(1) a recognition server, connected to a network with a communication interface, for receiving a barcode and a recognition request from a hand-held data processing device, and returning a recognition result over the network; and
(2) barcode recognition means, included in the recognition server, for processing the recognition request to perform recognition on the received barcode, and generating the recognition result to be returned by the recognition server.

In the above arrangements, the method, the system, and the hand-held data processing device provided by the present invention enable the user to conveniently use the hand-held data processing device for barcode recognition, and have no limitation in geographic location. In addition, since the barcode is recognized through wireless transmission and remote operation, barcode recognition can be conveniently and rapidly performed anytime and anywhere without being limited by the data processing capability of the hand-held data processing device.

The technical solutions and embodiments of the present invention are described in detail below, and the content of the detailed description is sufficient for persons skilled in the art to understand the technical content of the present invention and to implement the present invention there accordingly.

### BRIEF DESCRIPTION OF THE DRAWINGS

The present invention will become more fully understood from the detailed description given herein below for illustration only, and thus are not limitative of the present invention, and wherein:
FIG. 1 is a block diagram of a system for recognizing a barcode according to an embodiment of the present invention;
FIG. 2 is a circuit block diagram of a hand-held data processing device according to an embodiment of the present invention; and
FIG. 3 is a flow chart of a method for recognizing a barcode according to the present invention.

### DETAILED DESCRIPTION

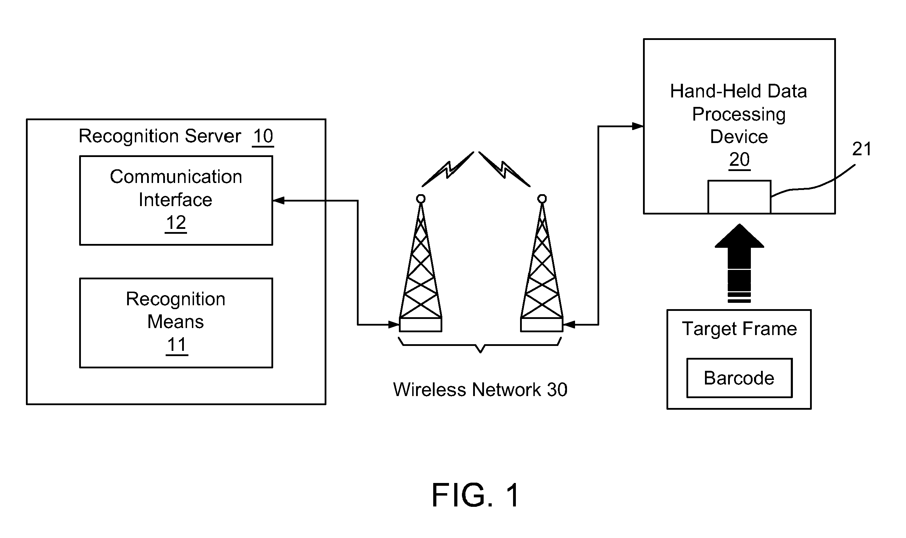

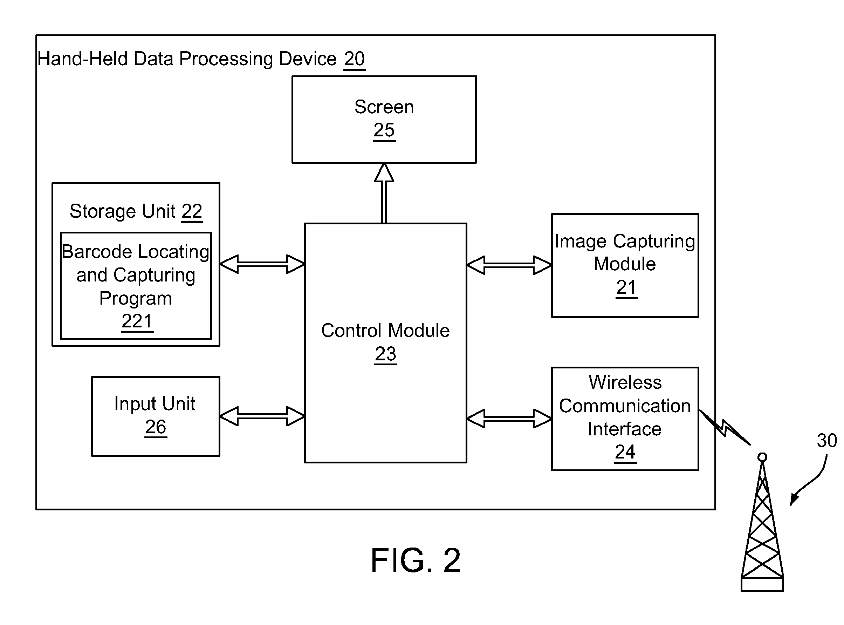

Referring to FIGs. 1 and 2, a system for recognizing barcode and a hand-held data processing device 20 for recognizing a barcode provided in an embodiment of the present invention are shown.

Referring to FIG. 1, the system for recognizing barcode includes a recognition server 10 and a recognition means 11 included in the recognition server 10. The recognition means 11 is provided for recognizing a plurality of types of barcodes. For example, the recognition means 11 can be a recognition program 11 supporting a plurality of types of barcodes, and installed to the recognition server 10. The recognition server 10 includes a communication interface 12. The communication interface 12 is used for connecting to a network, such as a wireless network 30. The wireless network 30 may be a mobile communication network, a wireless Internet network, or a wireless local area network.

It should be noted that, a solid line connecting the communication interface 12 and the wireless network 30 in FIG. 1 is used for representing a data flow between the communication interface 12 and the wireless network 30, but not intended to limit the connection manner between the communication interface 12 and the wireless network 30. The communication interface 12 may be a wireless communication module, for example, a mobile communication module supporting a GPRS/CDMA/WCDMA/ HSDPA/HSUPA/LTE mobile communication network or a wireless communication module supporting Wi-Fi/WiMAX/Wireless Lan, and is connected to the wireless network 30 in a wireless manner. Alternatively, the communication interface 12 may be a wired communication module, for example, a network card, and is connected to a base station providing the wireless network 30 in a wired manner.

By enabling the recognition means 11 and connecting the communication interface 12 to the wireless network 30, the recognition server 10 receives a barcode and a corresponding recognition request sent from a remote end. After processing the recognition request, the recognition means recognizes the received barcode and generates a recognition result. The recognition result contains barcode type and barcode information. Finally, the recognition server 10 returns the recognition result of the barcode to the remote end sending the recognition request over the wireless network 30.

Referring to FIGs. 1 and 2, the hand-held data processing device 20 may be a personal digital assistant PDA, a portable navigation device PND, a smart phone, or a barcode scanning device with wireless communication transmission function. The hand-held data processing device 20 includes an image capturing module 21, a storage unit 22, a control module 23, a wireless communication interface 24, and a screen 25.

Referring to FIGs. 1 and 2, the image capturing module 21 is used for capturing a target frame containing the barcode. The image capturing module 21 is a digital camera including a complementary metal-oxide semiconductor CMOS or charge-coupled Device CCD, and is preferably a high-resolution digital camera with autofocus AF function, so as to clearly capture the target frame.

Referring to FIG. 2, the storage unit 22 is used for temporarily storing the target frame containing the barcode. And the storage unit 22 also stores a barcode locating and capturing program 221. The barcode locating and capturing program 221 is used for locating the barcode in the target frame, so as to acquire the barcode.

The storage unit 22 varies with the type of the hand-held data processing device 20, and is, for example, a built-in or an external NAND Flash memory card for use in a portable device. If the hand-held data processing device 20 is a notebook, the storage unit 22 may be a combination of a system memory and a hard disk.

The control module 23 is used for controlling the image capturing module 21 to capture the target frame containing the barcode. After the control module 23 executes the barcode locating and capturing program 221, the control module 23 finds out the barcode from the target frame so as to acquire the barcode in the target frame, and generates a recognition request corresponding to the barcode. Finally, the control module 23 transmits the barcode and the recognition request to the recognition server 10 over the wireless network 30, and receives a recognition result returned by the recognition server 10. The control module 23 includes a processor, a system logic chip set, a screen interface and the like for processing information. The processor and the system logic chip set may be separately disposed on a plurality of electronic elements of a circuit board, and may also be a system-on-a-chip SoC. The control module 23 for use in the hand-held data processing device 20 is generally a SoC.

The wireless communication interface 24 is connected to the control module 23, and is used for connecting to the wireless network 30, so as to transmit the barcode and the recognition request sent by the control module 23 to the recognition server 10 over the wireless network 30. Meanwhile, the wireless communication interface 24 receives the recognition result returned by the recognition server 10, and transmits the recognition result to the control module 23. The wireless communication interface 24 may be a mobile communication module supporting a GPRS/CDMA/WCDMA/HSDPA/HSUPA/LTE mobile communication network or a wireless communication module supporting Wi-Fi/Wireless Lan/WiMAX. The specification of the wireless communication interface 24 is dependent on the type of the wireless network 30, and the wireless communication interface 24 may also support a plurality of specifications at the same time.

The screen 25 is connected to the control module 23, and when the control module 23 controls the image capturing module 21 to capture the target frame, the control module 23 generates a corresponding image display signal to enable the screen 25 to display the target frame, so as to allow the user to confirm whether the target frame contains the barcode, thereby ensuring that the image capturing module 21 is positioned in a correct orientation to capture the barcode. When the control module 23 receives the recognition result returned by the recognition server 10 through the wireless communication interface 24, the control module 23 generates a corresponding image display signal, and transmits the corresponding image display signal to the screen 25, such that the screen 25 displays the recognition result according to the image screen signal.

In addition, the hand-held data processing device 20 further includes an input unit 26 connected to the control module 23. The input unit 26 is operated by the user to send an input signal to the control module 23, so that the control module 23 is driven to activate the barcode locating and capturing program 221, or send a confirmation instruction when the user confirms that the target frame displayed on the screen 25 contains the barcode, so as to enable the control module 23 to control the image capturing module 21 to capture the barcode in the target frame, and send the barcode and the recognition request. The input unit 26 may be a key, a joystick, a mouse, a touchpad, or a trackball. The input unit 26 may also be a touch panel directly laminated on the screen 25.

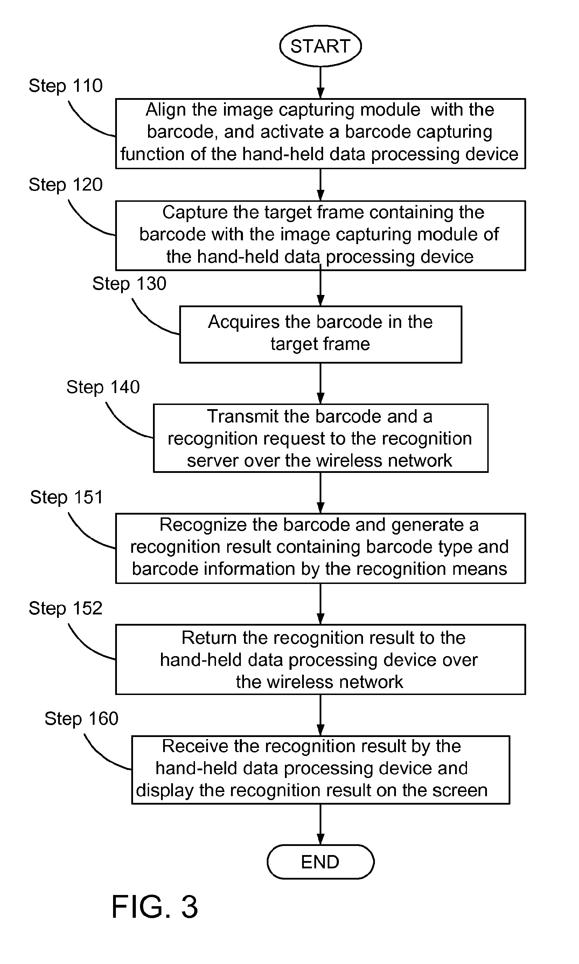

Referring to FIG. 3, according to the system for recognizing barcode, the present invention further provides a method for recognizing a barcode.

Referring to FIGs. 2 and 3, according to the method, firstly, the user moves the hand-held data processing device 20 to align the image capturing module 21 with the barcode, and operate the input unit 26 to the control module 23, so as to activate a barcode capturing function of the hand-held data processing device 20, Step 110. At this time, the control module 23 controls the image capturing module 21 to capture the target frame, and to display the target image on the screen 25.

When the user confirms that the target frame displayed on the screen 25 contains the barcode or the barcode locating and capturing program 221 confirms that the target frame contains the barcode through image features, the control module 23 manually or automatically controls the image capturing module 21 of the hand-held data processing device 20 to capture the target frame containing the barcode, Step 120.

Then, by executing the barcode locating and capturing program 221, the control module 23 acquires the barcode in the target frame and generates a recognition request corresponding to the barcode (Step 130).

Through the wireless communication interface 24 of the hand-held data processing device 20, the control module 23 transmits the barcode and the recognition request to the recognition server 10 over the wireless network 30, Step 140, and waits for the returning of a recognition result from the recognition server.

As described above, the recognition means 11 is for recognizing a plurality of types of barcodes, and the recognition server 10 is connected to the wireless network 30, so that when the recognition server 10 receives the barcode and the recognition request, the recognition means 11 included in the recognition server 10 recognizes the barcode, and generates the recognition result containing barcode type and barcode information, Step 151. Then, the recognition server 10 returns the recognition result to the hand-held data processing device 20 over the wireless network 30, Step 152.

The control module 23 of the hand-held data processing device 20 receives the recognition result through the wireless communication interface 24. According to the recognition result, the control module 23 generates a corresponding image display signal, and transmits the corresponding image display signal to the screen 25, such that the screen 25 displays the recognition result according to the image screen signal (Step 160).

While the present invention has been described by the way of example and in terms of the preferred embodiments, it is to be understood that the invention need not to be limited to the disclosed embodiments. On the contrary, it is intended to cover various modifications and similar arrangements included within the spirit and scope of the appended claims, the scope of which should be accorded the broadest interpretation so as to encompass all such modifications and similar structures.

## Claims

1. A method for recognizing a barcode, for a hand-held data processing device and a recognition server, wherein the hand-held data processing device includes an image capturing module and a wireless communication interface for connecting the hand-held data processing device over a wireless network, the method comprising steps of:
capturing a target frame containing the barcode by the image capturing module of the hand-held data processing device,;
acquiring the barcode in the target frame by the hand-held data processing device;
transmitting the barcode and a recognition request by the wireless communication interface of the hand-held data processing device to the recognition server over the wireless network, wherein the recognition server includes barcode recognition means for recognizing a plurality of types of barcodes;
performing recognition on the barcode by the barcode recognition means, and returning a recognition result by the recognition server to the hand-held data processing device over the wireless network; and
receiving the recognition result by the hand-held data processing device, and displaying the recognition result on a screen.

2. The method for recognizing a barcode set forth in claim 1, wherein the step of acquiring the barcode in the target frame comprises:
executing a barcode locating and capturing program by the hand-held data processing device to acquire the barcode from the target frame.

3. The method for recognizing a barcode set forth in claim 1, wherein the recognition result comprises barcode type and barcode information.

4. The method for recognizing a barcode set forth in claim 1, wherein the wireless network is a mobile communication network, a wireless network, or a wireless local area network.

5. The method for recognizing a barcode set forth in claim 1, wherein the hand-held data processing device is selected from the group consisting of a personal digital assistant, a portable navigation device, a smart phone, and a barcode scanning device with wireless communication transmission function.

6. A hand-held data processing device for recognizing a barcode, comprising:
an image capturing module, for capturing a target frame containing a barcode;
a control module, for controlling the image capturing module to capture the target frame containing the barcode, acquiring the barcode in the target frame to generate a recognition request corresponding to the barcode, and receiving a returned recognition result of the barcode;
a wireless communication interface, connected to the control module, for connecting to a wireless network to transmit the barcode and the recognition request to a recognition server over the wireless network, and receive the recognition result returned by the recognition server; and
a screen, connected to the control module, for displaying the target frame containing the barcode and the recognition result.

7. The hand-held data processing device set forth in claim 6, further comprising a storage unit, for storing the target frame containing the barcode and a barcode locating and capturing program, wherein the control module executes the barcode locating and capturing program to capture the barcode in the target frame.

8. The hand-held data processing device set forth in claim 6, wherein the wireless network is a mobile communication network, a wireless Internet network, or a wireless local area network.

9. The hand-held data processing device set forth in claim 6, further comprising an input unit, connected to the control module, for sending an input signal to the control module to control the image capturing module to capture the target frame containing the barcode.

10. The hand-held data processing device set forth in claim 6, wherein the input unit is selected from the group consisting of a key, a joystick, a touchpad, a touch panel, a trackball, and a mouse.

11. A system for recognizing a barcode, comprising:
a recognition server, connecting to a network with a communication interface, for receiving a barcode and a recognition request, and returning a recognition result over the network; and
barcode recognition means, included in the recognition server, for processing the recognition request to recognize the received barcode, and generating the recognition result to be returned by the recognition server.

12. The system set forth in claimed 11, wherein the communication interface is a wireless communication module.

13. The system set forth in claimed 11, wherein the communication interface is a wired communication module.

14. The system set forth in claimed 11, wherein the network is a mobile communication network, a wireless network, or a wireless local area network.

15. The system set forth in claimed 11, wherein means for barcode recognition is a recognition program supporting plural barcode types is installed to the recognition server.
